Europäisches Patentamt

European Patent Office

Office européen des brevets

(11) Publication number: **0 218 401**
**A2**

# EUROPEAN PATENT APPLICATION

(21) Application number: **86307228.6**

(22) Date of filing: **19.09.86**

(51) Int. Cl.⁴: **G 06 F 3/12**

(30) Priority: **01.10.85 JP 150232/85**

(43) Date of publication of application:
**15.04.87 Bulletin 87/16**

(84) Designated Contracting States: **DE FR GB**

(71) Applicant: **SEIKO INSTRUMENTS & ELECTRONICS LTD.**
**31-1, Kameido 6-chome**
**Koto-ku Tokyo 136 (JP)**

(72) Inventor: **Tanaka, Fumihiro**
**Seiko Instruments & Electronics Ltd.**
**31-1, Kameido 6-chome Koto-ku Tokyo (JP)**

**Matsushima, Kenichi**
**Seiko Instruments & Electronics Ltd.**
**31-1, Kameido 6-chome Koto-ku Tokyo (JP)**

**Shimada, Yoshio**
**Seiko Instruments & Electronics Ltd.**
**31-1, Kameido 6-chome Koto-ku Tokyo (JP)**

**Yamaguchi, Kaneo**
**Seiko Instruments & Electronics Ltd.**
**31-1, Kameido 6-chome Koto-ku Tokyo (JP)**

**Watanabe, Shinya**
**Seiko Instruments & Electronics Ltd.**
**31-1, Kameido 6-chome Koto-ku Tokyo (JP)**

(74) Representative: **Caro, William Egerton et al**
**J. MILLER & CO. Lincoln House 296-302 High Holborn**
**London WC1V 7JH (GB)**

(54) An interface circuit for video signal hard copy apparatus and video signal hard copy apparatus provided therewith.

(57) An interface circuit for a video signal hard copy apparatus comprises a delay circuit (7) for setting arbitrarily a delay of a sync signal, a sampling clock generation circuit (8) for producing a sampling clock signal having a predetermined phase relation with a video sync signal through the delay circuit (7) and a data sampling circuit (3) for sampling an image signal by the sampling clock signal. An image data memory (4) stores the output of the sampling circuit and a control circuit (9) receives the data of the memory circuit (4) and sets the delay of the delay circuit (7). The arrangement is such that, in operation, data samples are compared in order to set the delay.

FIG.1

## Description

### AN INTERFACE CIRCUIT FOR VIDEO SIGNAL HARD COPY APPARATUS AND VIDEO SIGNAL HARD COPY APPARATUS PROVIDED THEREWITH

This invention relates to interface circuits for video signal hard copy apparatus and to video signal hard copy apparatus provided therewith. Hard copy apparatus receives a video signal as input data and prints and records an image.

As accuracy. density and resolution of image display devices in recent CAD/CAM applications have made progress, it has now become necessary for hard copy apparatus also to reproduce a displayed image with a high level of fidelity. In order particularly to effect high fidelity recording of graphic displays sampling of an image signal by a sampling clock signal on a 1:1 basis must be made.

Some display devices having low resolution supply a sync clock signal corresponding to a pixel signal together with a display video signal, and, in the past. sampling of an image signal by this clock signal has been made.

When display devices do not have such a sync clock signal, there has been employed conventionally a clock signal generator which has some multiple of the frequency of the sync clock signal described above and a frequency division circuit and synchronises the phase of the frequency division circuit by a video sync signal.

In the latest high resolution display devices described above, however, the video signal frequency is as high as or higher than 100 MHz and hardly any of them supply a sync clock signal. In a system which also uses a frequency division circuit there is also a limit to circuit elements which operate at several hundred MHz and such a circuit cannot be accomplished easily. With such a high speed video signal. variance of the delay of the circuit elements used frequently cause variance of phase between the sync signal and the image signal. In colour display devices. phases mostly vary among R, G and B signals.

According to one aspect of the present invention there is provided an interface circuit for a video signal hard copy apparatus characterised by comprising: a delay circuit for setting arbitrarily a delay of a sync signal; a sampling clock generation circuit for producing a sampling clock signal having a predetermined phase relation with a video sync signal through said delay circuit; a data sampling circuit for sampling an image signal by said sampling clock signal; an image data memory circuit for storing the output of said sampling circuit; and a control circuit for receiving the data of said memory circuit and setting the delay of said delay circuit, the arrangement being such that, in operation, a plurality of data samples are compared in order to set said delay.

In the preferred embodiment the interface circuit includes an image signal input circuit for receiving an image signal and converting the same into a logic level for the data sampling circuit.

The interface circuit may include a video sync signal input circuit for receiving a video sync signal and converting the same into a logic level for the delay circuit.

According to another aspect of the present invention there is provided a video signal hard copy apparatus having an interface circuit according to the present invention.

The sample data is repeatedly read and compared whenever the delay is changed so that the change of sample data can be detected. In addition, image data can be sampled stably by setting the changing delay quantity at a point where the delay quantity is deviated by a half period of the sampling clock or at an intermediate point of a plurality of changing points.

The invention is illustrated, merely by way of example, in the accompanying drawings, in which:-

Figure 1 is a block diagram of an interface circuit according to the present invention for a video signal hard copy apparatus,

Figure 2 shows a display image to explain adjustment by an interface circuit according to the present invention;

Figure 3 is a view showing the state of data inside an image data memory of an interface circuit according to the present invention;

Figure 4 is a timing chart showing the state of sampling in an interface circuit according to the present invention;

Figure 5 is a timing chart showing the relation between an image signal and a sampling clock signal in an interface circuit according to the present invention; and

Figure 6 is a block diagram of a video signal hard copy apparatus including an interface circuit according to the present invention.

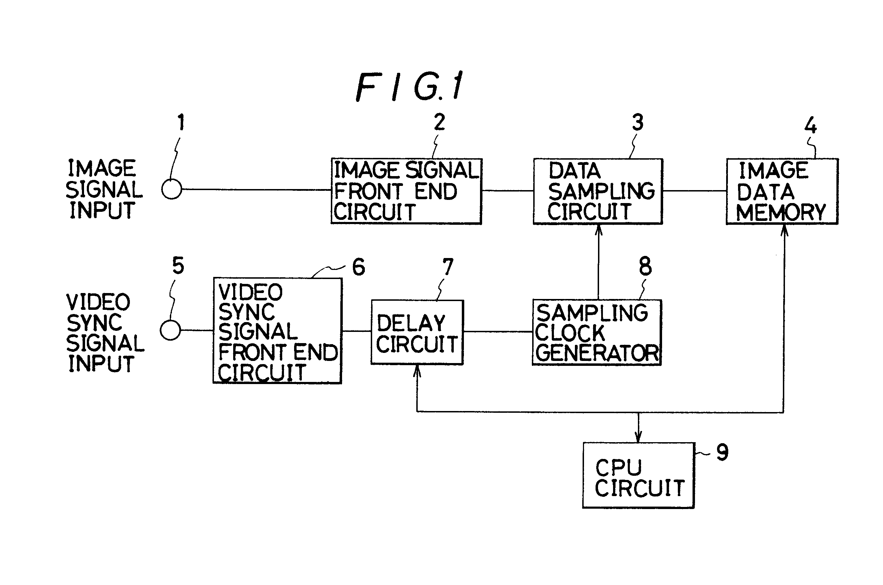

Figure 1 shows an interface circuit according to the present invention for a video signal hard copy apparatus having an image signal front end circuit 2 for converting an image signal input thereto from an image signal input terminal 1 to a logic level and consists of, for example, a signal buffer circuit or a comparator circuit. The image signal which is converted to the logic level by the front end circuit 2 is sampled in a data sampling circuit 3 by a clock signal from a sampling clock generator 8 and is stored in an image data memory 4.

A video sync signal is applied to a video sync signal input terminal 5, and is converted to a logic level by a video sync signal front end circuit 6 in the same way as the image signal. A suitable delay time is applied to the video sync signal by a delay circuit 7 consisting of delay elements having a plurality of delay outputs such as the delay line and a signal selection circuit, and is then inputted to the sampling clock generator 8. The sampling clock generator 8 described above is a PLL circuit consisting of a quartz oscillator circuit, a phase comparator and a phase correction circuit, and compares the phase of the video sync signal with that of the clock signal and outputs a clock signal having always a constant phase with respect to the video sync signal. It generates a sampling clock signal having always a constant phase with respect to the image signal also, by use of an oscillation element which has the same frequency as the frequency of the video clock signal. A CPU circuit 9 controls the start of sampling of the sampling circuit 3, reads image data from the image data memory 4, and sets the delay of the delay circuit 7.

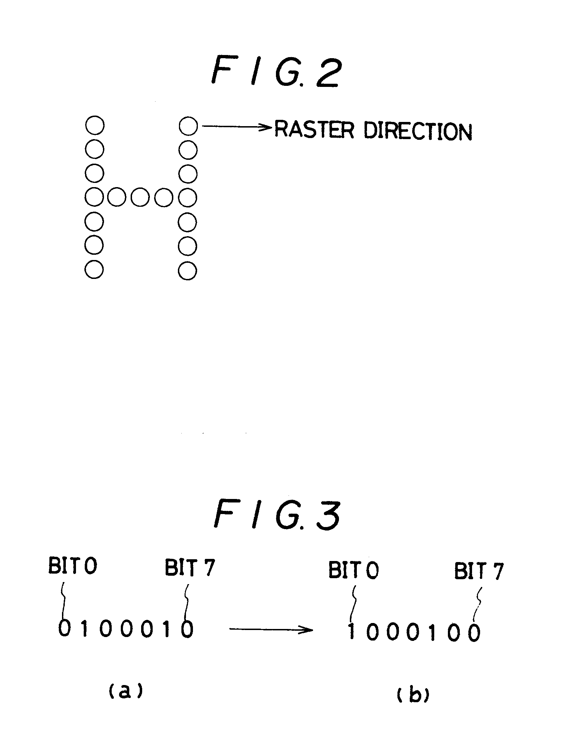

Next, phase adjustment procedure of the sampling clock signal with respect to the image signal will be explained. First of all, an image is displayed on the display device. Here it will be assumed that the letter H shown in Figure 2 is displayed. Since the delay of the delay circuit 7 must be changed sequentially, the delay is first set to a minimum level and sampling of the image data is conducted. The image data sampled above is recorded in the image data memory 4. Then the CPU 9 searches the image data memory 4 in the same way as raster scanning of the video signal, whereby the data corresponding to the upper end of the image can be found at the address corresponding to the portion where the image is displayed, as shown in Figure 3(a). Next, the delay is increased by one step and sampling is made. The data thus sampled is compared with the state of the previous data. These procedures are repeated, and the bit position of the data becomes deviated at any of the delays as shown in Figure 3(b).

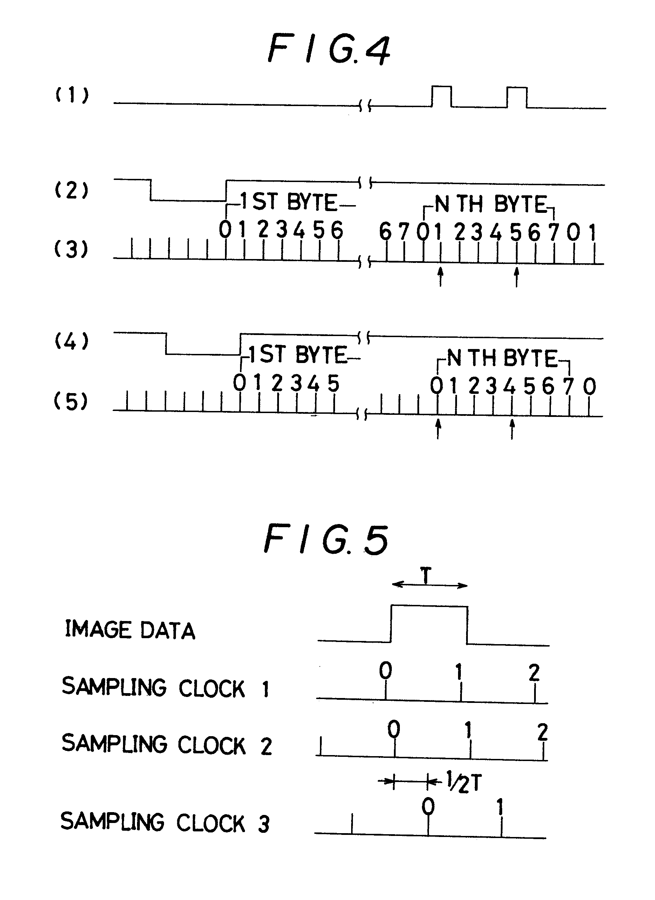

The operation described above will be explained with reference to the timing chart of Figure 4. In the timing chart, (1) represents the image signal; (2) is the sync signal when the delay is at the minimum level; (3) is the sampling clock signal generated by the sync signal of (2); (4) is a sync signal when a given delay is set; and (5) is a sampling clock signal generated by (4). When the data shown in Figure 2 is sampled when setting the minimum delay, data of logic "1" is sampled by bit 1 and bit 5 of the Nth byte from the rear end of the sync signal as shown in Figure 3(a). In the case of the sampling clock signal generated by the sync signal (4) which is delayed, sampling is made by bit 0 and bit 4 of the Nth byte as shown in Figure 3(b). When the image data is sampled, it is preferred that sampling is made at the centre of the image data signal as shown by (3) in Figure 4, but it is difficult to judge directly whether or not sampling is made at the centre. Therefore, the delay is sequentially changed to determine a point where the state of sampling changes as represented by sampling clock 1 and sampling clock 2 as shown in Figure 5. Since this point represents that sampling is made in an unstable state, sampling can be made while keeping a stable phase such as a sampling clock 3 by setting a delay which deviates by a one-half period of the sampling clock signal from the delay of this unstable point.

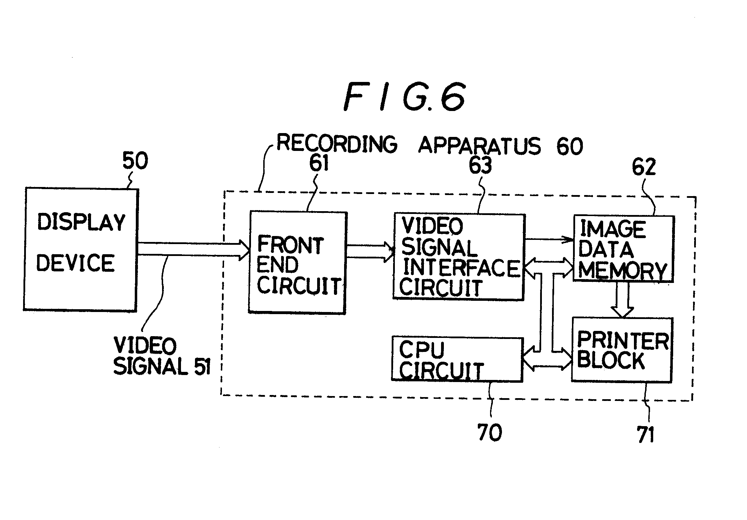

The above mentioned video signal interface circuit in accordance with the present invention is included in a video signal hard copy or recording apparatus 60 as shown in Figure 6. A display device 50 provides a video signal 51 to a front end circuit 61 of the hard copy apparatus. The output of the front end circuit 61 is fed to a video signal interface circuit 63 including the data sampling circuit 3, the delay circuit 7 and the sampling clock generator 8 of Figure 1. The hard copy apparatus also includes an image data memory 62, a CPU circuit 70 and a printer block 71. The video signal interface circuit 63 of the CPU circuit 70 and the image data memory 62, constitute an image interface circuit according to the present invention. The CPU circuit 70 also drives the printer block 71.

The interface circuit according to the present invention and described above can stably sample video signals having all phase relationships, and adjustment can be made easily under the control of the CPU circuit. Further, the interface circuit can be connected to a plurality of display devices by use of a simple multiplexer by adjusting individually the display devices and storing the delay for each display device in, for example, a non-volatile memory.

**Claims**

1. An interface circuit for a video signal hard copy apparatus characterised by comprising: a delay circuit (7) for setting arbitrarily a delay of a sync signal; a sampling clock generation circuit (8) for producing a sampling clock signal having a predetermined phase relation with a video sync signal through said delay circuit (7); a data sampling circuit (3) for sampling an image signal by said sampling clock signal; an image data memory circuit (4) for storing the output of said sampling circuit; and a control circuit (9) for receiving the data of said memory circuit (4) and setting the delay of said delay circuit (7), the arrangement being such that, in operation, a plurality of data samples are compared in order to set said delay.

2. An interface circuit as claimed in claim 1 characterised by an image signal input circuit (2) for receiving an image signal and converting the same into a logic level for the data sampling circuit (3).

3. An interface circuit as claimed in claim 1 or 2 characterised by a video sync signal input circuit (6) for receiving a video sync signal and converting the same into a logic level for the delay circuit (7).

4. A video signal hard copy apparatus characterised by an interface circuit as claimed in any preceding claim.

5. In a recording apparatus (60) for receiving a video signal (51) for displaying image data on a display device (50) and printing and recording said image data, an interface circuit of a video signal hard copy apparatus comprising: a delay circuit (7) which sets arbitrarily a delay quantity of a sync signal; a sampling clock generation circuit (8) which has a predetermined phase relation with a video sync signal through said delay circuit (7); a data sampling circuit (3) which samples an image signal by said sampling clock; an image data memory circuit (4) which stores the output of said sampling circuit; and a control circuit (9) which receives the data of said memory circuit (4) and sets the delay quantity of said delay circuit (7): whereby a plurality of data samples for said delay quantity are compared in order to set the delay quantity.

FIG.1

IMAGE SIGNAL INPUT 1

IMAGE SIGNAL FRONT END CIRCUIT 2

DATA SAMPLING CIRCUIT 3

IMAGE DATA MEMORY 4

VIDEO SYNC SIGNAL INPUT 5

VIDEO SYNC SIGNAL FRONT END CIRCUIT 6

DELAY CIRCUIT 7

SAMPLING CLOCK GENERATOR 8

CPU CIRCUIT 9

# F I G. 2

→RASTER DIRECTION

# F I G. 3

BIT 0    BIT 7          BIT 0          BIT 7

0 1 0 0 0 0 1 0  ⟶  1 0 0 0 1 0 0

(a)                    (b)

## F I G. 4

(1)

(2)

─1ST BYTE─      ┌N TH BYTE┐

(3)    0 1 2 3 4 5 6    6 7 0 1 2 3 4 5 6 7 0 1

(4)

─1ST BYTE─      ┌N TH BYTE┐

(5)    0 1 2 3 4 5    0 1 2 3 4 5 6 7 0

## F I G. 5

| | T |
| --- | --- |

IMAGE DATA

SAMPLING CLOCK 1     0    1    2

SAMPLING CLOCK 2     0    1    2

½T

SAMPLING CLOCK 3     0    1

# FIG.6

RECORDING APPARATUS 60

DISPLAY DEVICE 50

VIDEO SIGNAL 51

FRONT END CIRCUIT 61

VIDEO SIGNAL INTERFACE CIRCUIT 63

IMAGE DATA MEMORY 62

CPU CIRCUIT 70

PRINTER BLOCK 71